# EUROPEAN PATENT SPECIFICATION

(11) **EP 4 578 346 B1**
(45) Date of publication and mention of the grant of the patent: **17.12.2025**
(21) Application number: 24209978.6
(22) Date of filing: 30.10.2024
(51) Int. Cl.: A47J 31/36

(54) **BREWING DEVICE**
BRÜHVORRICHTUNG
DISPOSITIF D'INFUSION

(30) Priority: 28.12.2023 CN 202311839855
(43) Date of publication of application: 02.07.2025
(73) Proprietor: Kalerm Technology (Suzhou) Co., Ltd, Suzhou Jiangsu 215134 (CN)
(72) Inventor: ZHANG, Qiming, Suzhou, Jiangsu 215134 (CN); LIU, Fuke, Suzhou, Jiangsu 215134 (CN)
(74) Representative: Winter, Brandl - Partnerschaft mbB

(56) References cited:
- CN-U- 212 878 950
- US-A- 5 103 716
- US-A1- 2022 125 236

## Description

### TECHNICAL FIELD

The present disclosure relates to the field of drink devices, and in particular, to a brewing device.

### BACKGROUND

A brewing device can be configured to make drinks such as coffee. The brewing device usually includes a brewing cylinder and one or two piston components, which together form a brewing chamber. Hot water with pressure flows through the brewing chamber to brew the powder or granules to be brewed, such as coffee powder or granules, in the brewing chamber to obtain a drink.

A piston component that extends into the brewing cylinder from the lower end thereof may be referred to as a lower piston component, a pipe component may be arranged in the lower piston component, and the water for brewing the drink may flow into the brewing chamber through a flow path defined by the pipe component. Reference is made to CN 212 878 950 U, US 2022/125236 A1 and US 5 103 716 A, which disclose such a brewing device and thereby the preamble of claim 1. For a conventional brewing device, the process of installing a pipe component to a main body of a lower piston component and the process of disassembling the pipe component from the main body are relatively inconvenient, so that the disassembly and installation of the pipe component are time-consuming and laborious.

### SUMMARY

Based on the above, the present disclosure provides a brewing device to improve the problem of time-consuming and laborious disassembly and installation of pipe components.

In a first aspect, the present disclosure provides a brewing device. The brewing device includes a piston component and a brewing cylinder, the piston component being configured to at least partially extend into the brewing cylinder from a lower end of the brewing cylinder. The piston component includes a piston body, a piston head and a pipe component. The piston head is installed at an upper end of the piston body. The pipe component at least partially extends in the piston body and the piston head and defines a flow path for introducing a liquid into the brewing cylinder. The piston head is pivotable around an axis relative to the piston body between a first position and a second position. The pipe component is coupled to the piston head and biased relative to the axis, so that as the piston head pivots relative to the piston body, the pipe component rotates around the axis. When the piston head is located at the first position, the pipe component is allowed to move downwardly relative to the piston head to separate from the piston head. When the piston head is located at the second position, the piston body prevents the pipe component from moving downward relative to the piston head.

According to the brewing device provided in the first aspect of the present disclosure, a pipe component can be disassembled from a piston body and a piston head only by first rotating the piston head relative to the piston body from a second position to a first position, and then moving the pipe component downward relative to the piston head. Correspondingly, the pipe component can be secured to the piston body and the piston head only by first moving the pipe component upward relative to the piston head to couple the pipe component with the piston head, and then rotating the piston head relative to the piston body from the second position to the first position. Therefore, for the piston component provided in the present disclosure, the disassembly and installation of the pipe component are relatively convenient.

In a second aspect, the present disclosure provides a brewing device. The brewing device includes a piston component and a brewing cylinder, the piston component being configured to at least partially extend into the brewing cylinder from a lower end of the brewing cylinder, the piston component being internally provided with a flow path for introducing a liquid into the brewing cylinder. The piston component including a piston body, a piston head and a pipe component, the pipe component defines the flow path for introducing a liquid into the brewing cylinder, the piston head is provided with a junction portion, an upper end of the piston body is provided with an engaging portion. By rotating the piston head relative to the piston body, the junction portion and the engaging portion are configured to be coupled or separated, with the junction portion and the engaging portion coupling or separating, the pipe component locks or releases relative to the piston head. The piston component further include a fastener, the fastener is configured to detachably fasten the piston head to the piston body.

According to the brewing device provided in the second aspect of the present disclosure, during disassembly of the piston head from the piston body, the fastener can be disassembled first, and then, the piston head can be rotated relative to the piston body to separate the junction portion from the engaging portion, thereby disassembling the piston head from the piston body. During installation of the piston head to the piston body, the piston head can be rotated relative to the piston body first to couple the junction portion with the engaging portion, and then, the fastener is fastened, thereby reliably securing the piston head to the piston body. This implementation balances the convenience of disassembly and installation of the piston head relative to the piston body and the firmness of connection between the piston head and the piston body.

### BRIEF DESCRIPTION OF THE DRAWINGS

In order to illustrate the technical solutions in the embodiments of the present disclosure more clearly, the following briefly introduces the accompanying drawings required in the embodiments.

It should be understood that the following accompanying drawings only show some embodiments of the present disclosure, and should not be considered as limiting the scope of protection.

It should also be understood that the same or similar reference numerals are used in the accompanying drawings to represent the same or similar features.

It should also be understood that the accompanying drawings are only illustrative, and the sizes and proportions of the features in the accompanying drawings may not be precise.
FIG. 1 is a schematic structural view of a brewing device according to an embodiment of the present disclosure.
FIG. 2 is a schematic structural view of a piston component of the brewing device in FIG. 1.
FIG. 3 is a schematic exploded view of the piston component in FIG. 2.
FIG. 4 is a longitudinal schematic cross-sectional view of the piston component in FIG. 2.
FIG. 5 is a top view of a piston body of the piston component in FIG. 2.
FIG. 6 is an axial-side schematic view of the piston body in FIG. 5.
FIG. 7 shows a relative position relationship between a piston body of the piston component in FIG. 2 and a joint, where the joint is located above a large-diameter portion.
FIG. 8 shows a relative position relationship between a piston body of the piston component in FIG. 2 and a joint, where the joint is located above a small-diameter portion.
FIG. 9 is a schematic structural view of a piston head of the piston component in FIG. 2.
FIG. 10 is a schematic cross-sectional view taken along a line A-A in FIG. 5.
FIG. 11 shows a relative position relationship between a piston body and a pipe component according to an alternative embodiment of the present disclosure, where the pipe component is located in a release portion.
FIG. 12 shows a relative position relationship between a piston body and a pipe component according to an alternative embodiment of the present disclosure, where the pipe component is located in a clamping portion.

### DETAILED DESCRIPTION

The embodiments of the present disclosure are exemplarily described below with reference to the accompanying drawings. It should be understood that there may be multiple implementations in the present disclosure, which should not be construed as a limitation to the embodiments described here. The embodiments described here are only for a more thorough and clear understanding of the present disclosure.

The present disclosure provides a brewing device 100. The brewing device 100 is configured to make drinks, such as coffee. The brewing device 100 may be used alone or as a functional unit applied to a drink machine, such as a coffee machine. It can be understood that the brewing device 100 is not limited to be configured to make coffee, but may also be configured to make other types of drinks. There are no specific limitations to the types of drinks made by the brewing device 100 in the present disclosure.

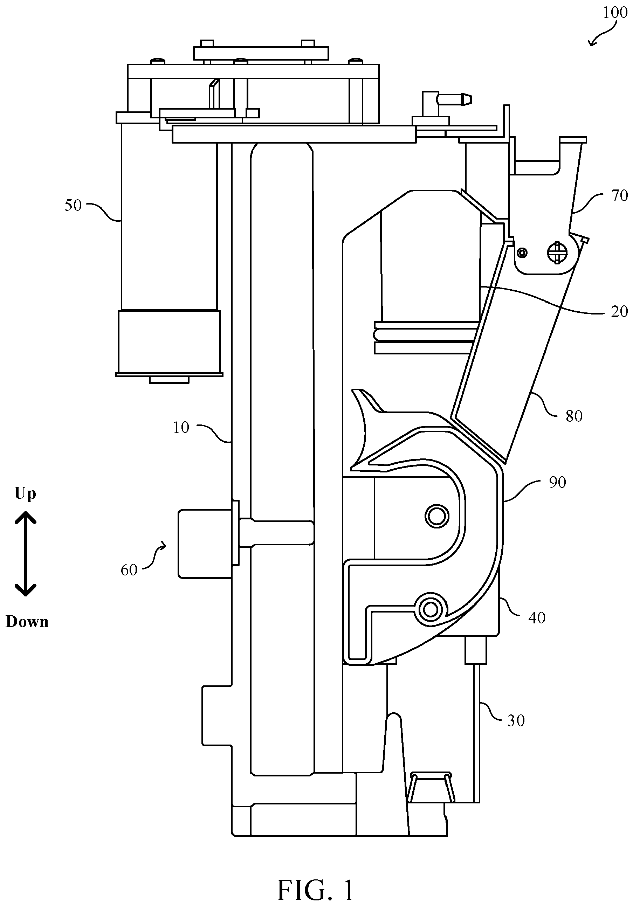

Referring to FIG. 1, the brewing device 100 may include a frame 10, a piston component, a brewing cylinder 40, a driving device 50 and a transmission mechanism 60. The piston component, the brewing cylinder 40, the driving device 50 and the transmission mechanism 60 may be installed on the frame 10 to be supported by the frame 10. The piston component may be an upper piston component 20, or the piston component may also be a lower piston component 30.

The driving device 50 can output power, and the power is transmitted to the brewing cylinder 40 through the transmission mechanism 60, so that the brewing cylinder 40 moves in a vertical direction relative to the upper piston component 20. For example, the driving device 50 may be a motor, and the transmission mechanism 60 may be a screw transmission mechanism. An upper end of the lower piston component 30 can extend into the brewing cylinder 40 to seal a bottom end of the brewing cylinder 40. As the brewing cylinder 40 moves in the vertical direction, the lower piston component 30 is driven to move together.

In FIG. 1, the brewing cylinder 40 is located at a relatively low position. In this case, the upper piston component 20 is separated from the brewing cylinder 40, a top end of the brewing cylinder 40 is opened, and the powder or granules (such as coffee powder or granules) to be brewed can be added to the brewing cylinder 40. As the brewing cylinder 40 rises, a lower end of the upper piston component 20 extends into the brewing cylinder 40 to enclose a roughly sealed brewing chamber together with the brewing cylinder 40 and the lower piston component 30.

Both the upper piston component 20 and the lower piston component 30 are provided with flow paths inside. A brewing liquid (such as hot water) can flow into the brewing chamber through the flow path of the lower piston component 30 to brew the powder or granules in the brewing chamber to obtain a drink. The brewed drink can flow out of the brewing chamber through the flow path in the upper piston component 20. The drink flowing out of the brewing chamber can be drunk directly, or can be drunk after being further processed.

It can be understood that although in the current example, the upper piston component 20 is secured relative to the frame 10 while the brewing cylinder 40 and the lower piston component 30 are movable relative to the frame 10, in other embodiments, the brewing cylinder 40 and the lower piston component 30 may be secured relative to the frame 10 while the upper piston component 20 is driven by the driving device 50 to move up and down.

Still referring to FIG. 1, the brewing device 100 may further include a feeder 70 and a channel element 80, the channel element 80 is installed on the feeder 70, and the feeder 70 is installed on the frame 10. The feeder 70 has a funnel-shaped feeding channel, that is, the feeding channel has a larger upper end and a smaller lower end. The powder or granules to be brewed can be poured into the feeder 70 from the space above the feeder 70. The channel element 80 has a transfer channel. The transfer channel extends from a lower end of the feeder 70 to an upper end of the brewing cylinder 40 to deliver the powder or granules to be brewed into the brewing cylinder 40.

In an embodiment of applying the brewing device 100 to a coffee machine, a grinding device can be arranged above the brewing device 100, and the grinding device can grind coffee beans into coffee powder or coffee granules. The feeder 70 can be configured to receive the coffee powder or coffee granules from the grinding device and deliver the coffee powder or coffee granules to the channel element 80.

Still referring to FIG. 1, the brewing device 100 may further include a residue pushing element 90. After the brewing is completed, the brewing cylinder 40 will descend together with the lower piston component 30. After descending to a relatively low position, the lower piston component 30 is blocked to stop. As the brewing cylinder 40 descends to the lowest position, the lower piston component 30 will push waste residues out of the brewing cylinder 40, and then, the residue pushing element 90 is driven to pivot to push the waste residues, so that the waste residues fall from the top of the brewing cylinder 40.

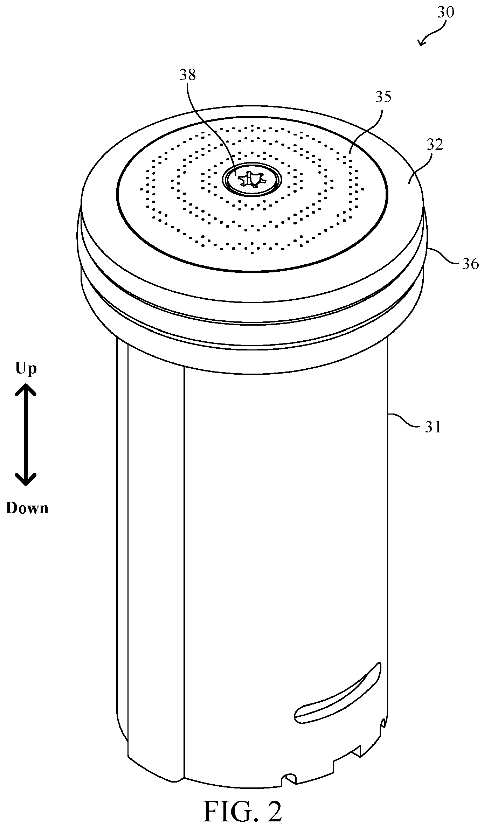

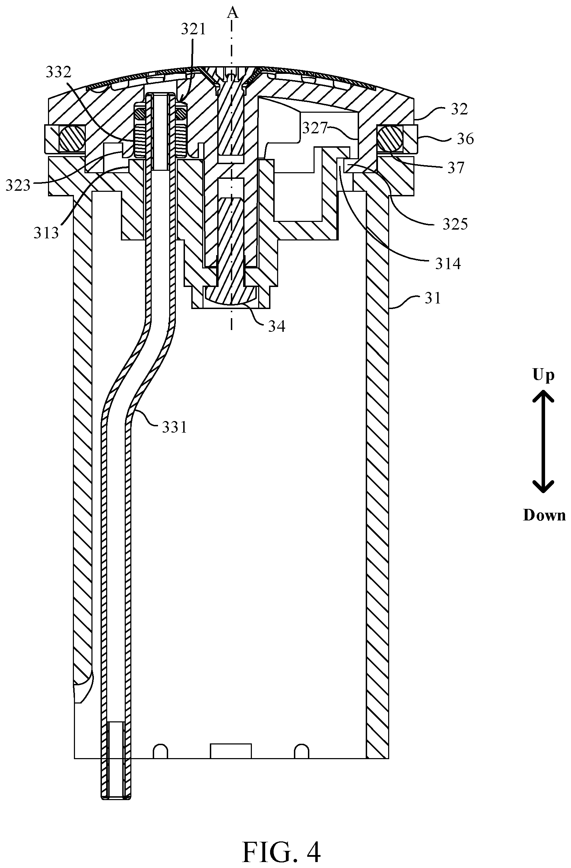

Referring to FIG. 2 to FIG. 4, the lower piston component 30 may include a piston body 31 and a piston head 32, and the piston head 32 may be installed at an upper end of the piston body 31. The piston head 32 may pivot around an axis A relative to the piston body 31. FIG. 4 schematically shows the axis A. The piston head 32 may move between a first position and a second position relative to the piston body 31 by pivoting around the axis A relative to the piston body 31.

Still referring to FIG. 2 to FIG. 4, the lower piston component 30 may further include a pipe component 33. The pipe component 33 may partially or completely extend in the piston body 31 and the piston head 32, and define a flow path for introducing a liquid into the brewing cylinder 40. The pipe component 33 is coupled to the piston head 32, and the pipe component 33 is biased relative to the axis A (or in other words, the pipe component 33 does not coincide with the axis A), so that as the piston head 32 pivots around the axis A relative to the piston body 31, the pipe component 33 rotates around the axis A along with the piston head 32. When the piston head 32 is located at the first position relative to the piston body 31, the piston body 31 allows the pipe component 33 to move downward relative to the piston head 32 to be separated from the piston head 32; and when the piston head 32 is located at the second position relative to the piston body 31, the piston body 31 prevents the pipe component 33 from moving downward relative to the piston head 32 to maintain the combination of the pipe component 33 and the piston head 32.

In this way, the pipe component 33 can be disassembled from the piston body 31 and the piston head 32 only by first rotating the piston head 32 relative to the piston body 31 from the second position to the first position, and then moving the pipe component 33 downward relative to the piston head 32; and the pipe component 33 can be secured to the piston body 31 and the piston head 32 only by first moving the pipe component 33 upward relative to the piston head 32 to couple the pipe component 33 with the piston head 32, and then rotating the piston head 32 relative to the piston body 31 from the second position to the first position. Therefore, the disassembly and installation of the pipe component 33 are relatively convenient.

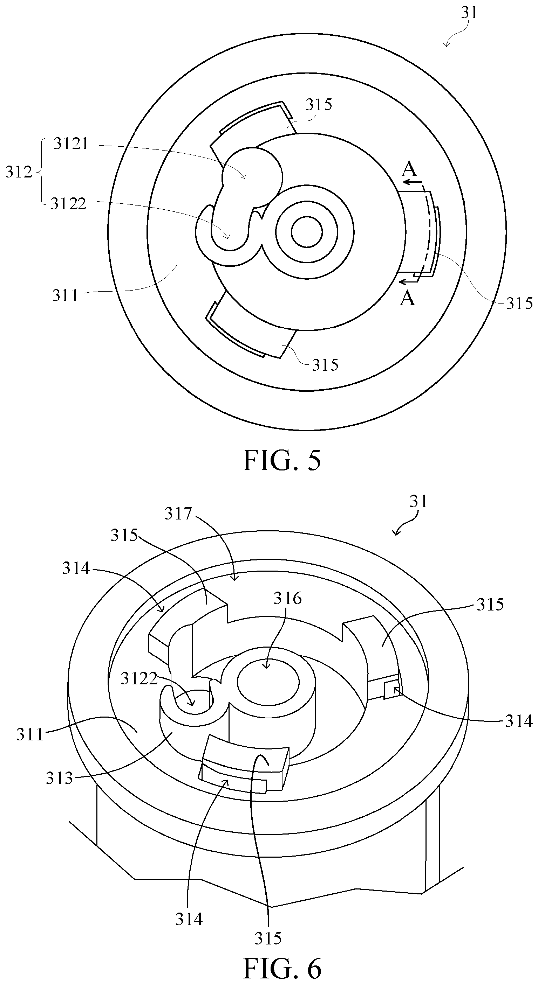

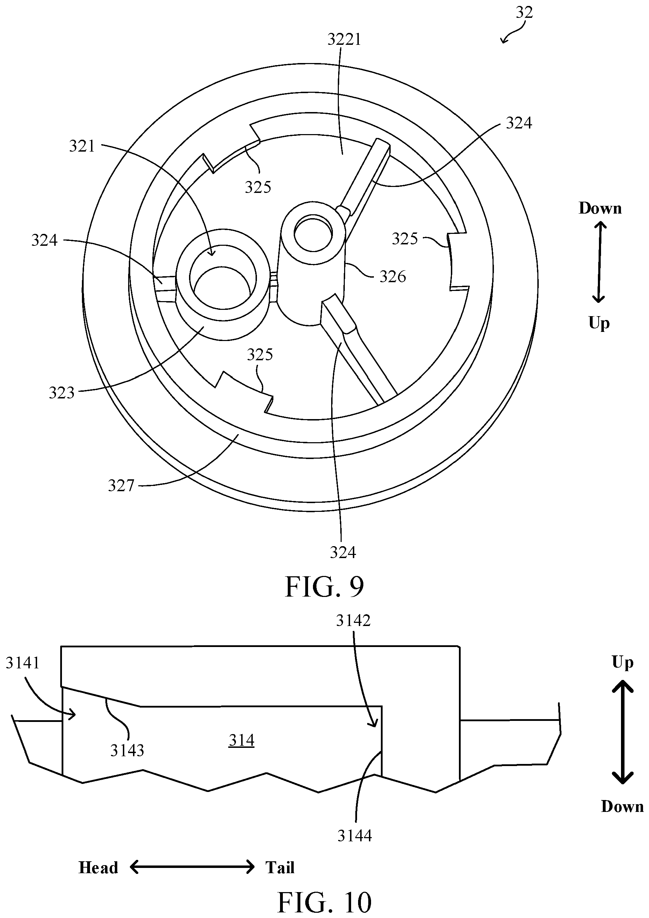

Referring to FIG. 6 and FIG. 9, the piston head 32 may further be provided with a junction portion 325, and the upper end of the piston body 31 may be provided with an engaging portion 314. As shown in FIG. 4, when the piston head 32 is located at the second position, the junction portion 325 is coupled to the engaging portion 314 to secure the piston head 32 to the piston body 31. Correspondingly, when the piston head 32 is located at the first position, the junction portion 325 is separated from the engaging portion 314.

According to this implementation, the junction portion 325 can be separated from the engaging portion 314 and the pipe component 33 can be released and allowed to move downward only by rotating the piston head 32 relative to the piston body 31 from the second position to the first position. The piston head 32 can be disassembled from the piston body 31, and the pipe component 33 can be directly moved downward and disassembled from the piston body 31 and the piston head 32. Correspondingly, according to this implementation, after the pipe component 33 is coupled to the piston head 32 upward, the junction portion 325 can be coupled to the engaging portion 314 and the pipe component 33 can be prevented from moving downward only by rotating the piston head 32 relative to the piston body 31 from the first position to the second position, thereby securing the piston head 32 to the piston body 31, and securing the pipe component 33 to the piston body 31 and the piston head 32.

The piston head 32 is usually provided with a filter screen 35. After a period of use, residues or greases will deposit on the filter screen 35, which may cause some unforeseen consequences, such as deterioration of the quality of drinks. In the current implementation of the present disclosure, since the piston head 32 can be disassembled from the piston body 31, when it is difficult to clean the whole or part of the piston head 32 (e.g., the filter screen 35 on the piston head 32) or the whole or part of the piston head reaches the end of the service life, it is possible to modularly replace the piston head 32 without replacing the whole lower piston component 30, which is beneficial for reducing the maintenance cost of the brewing device 100.

Referring to FIG. 9, the piston head 32 may be provided with a shaft portion 326 extending downward from a lower end surface 3221 thereof, and the shaft portion 326 may coincide with the axis A, or in other words, the shaft portion 326 may define the axis A. In combination with FIG. 6, the piston body 31 may be provided with a shaft hole 316 suitable for receiving the shaft portion 326. The shaft portion 326 and shaft hole 316 with the above structure can provide support and guidance for the rotation of the piston head 32 relative to the piston body 31, thereby improving the convenience of disassembly and installation. It can be understood that in other embodiments, the piston body 31 may be provided with a shaft portion 326, while the piston head 32 may be provided with a shaft hole 316.

Still referring to FIG. 6 and FIG. 9, the piston head 32 is provided with a support circumferential wall 327 surrounding the shaft portion 326, and the piston body 31 is provided with a support recess portion 317 for inserting the support circumferential wall 327. An outer circumferential surface of the support circumferential wall 327 is in close contact with an inner surface of the support recess portion 317, and central shafts of both coincide with the axis A. The cooperation between the outer circumferential surface of the support circumferential wall 327 and the inner surface of the support recess portion 317 can provide additional support and guidance for the rotation of the piston head 32 relative to the piston body 31, thereby providing protection for the shaft portion 326 and reducing the risk of damage to the shaft portion 326.

It can be understood that although in the accompanying drawings, the piston head 32 is provided with the support circumferential wall 327 surrounding the shaft portion 326, and the piston body 31 is provided with the support recess portion 317 for inserting the support circumferential wall 327, in other examples of the present disclosure, both may also have other structures. For example, in an alternative embodiment, the piston body 31 is provided with a support circumferential wall 327 surrounding the shaft portion 326, and the piston head 32 is provided with a support recess portion 317 for inserting the support circumferential wall 327.

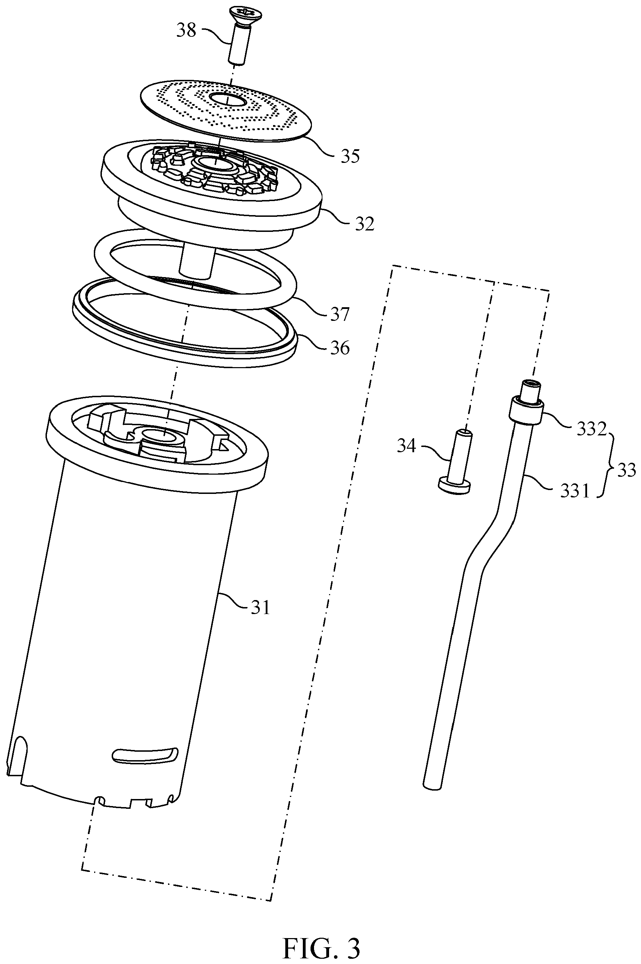

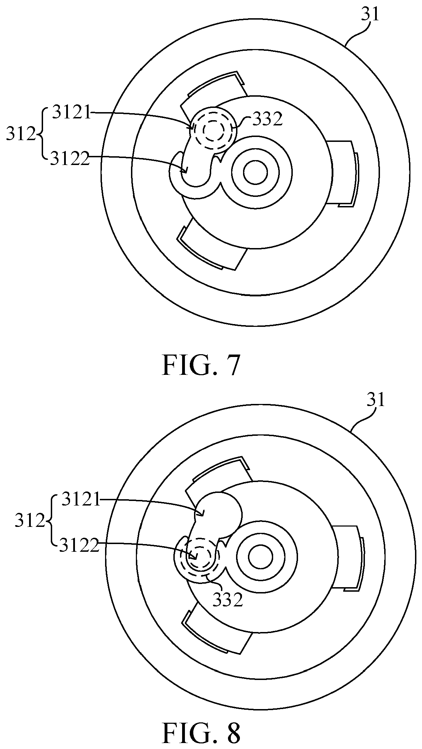

There are various ways in which the piston body 31 can selectively prevent the downward movement of the pipe component 33, which is not particularly limited in the present disclosure. As an implementation, referring to FIG. 3 to FIG. 6, the pipe component 33 may include a pipe body 331 and a joint 332 secured to the pipe body 331, and an upper end wall 311 of the piston body 31 may be provided with a through hole 312. The through hole 312 may include a large-diameter portion 3121 and a small-diameter portion 3122. The joint 332 is configured to pass through the large-diameter portion 3121 and cannot pass through the small-diameter portion 3122. For example, the outer diameter of the joint 332 is greater than the inner diameter of the small-diameter portion 3122 and less than the inner diameter of the large-diameter portion 3121. As shown in FIG. 7, when the piston head 32 is located at the first position relative to the piston body 31, the joint 332 is located above the large-diameter portion 3121. As shown in FIG. 8, when the piston head 32 is located at the second position relative to the piston body 31, the joint 332 is located above the small-diameter portion 3122.

As the piston head 32 pivots relative to the piston body 31 between the first position and the second position, the piston head 32 drives the pipe component 33 to move, thereby enabling the joint 332 to move. After the piston head 32 moves to the first position, the joint 332 moves above the large-diameter portion 3121. Since the large-diameter portion 3121 allows the joint 332 to pass through, the downward movement of the joint 332 located above the large-diameter portion 3121 will not be blocked. Therefore, when the joint 332 is located above the large-diameter portion 3121, the pipe component 33 can be moved downward relative to the piston head 32, so that the pipe component 33 is separated from the piston head 32 and finally separated from the piston body 31. That is to say, when the joint 332 is located above the large-diameter portion 3121, the piston body 31 releases the pipe component 33. After the piston head 32 moves to the second position, the joint 332 moves above the small-diameter portion 3122. Since the joint 332 cannot pass through the small-diameter portion 3122, the joint 332 located above the small-diameter portion 3122 will be blocked and cannot move downward. Therefore, when the joint 332 is located above the small-diameter portion 3122, it is not possible to separate the pipe component 33 from the piston head 32 by moving the pipe component 33 downward, thereby preventing the pipe component 33 from moving downward.

In addition, according to this implementation, during installation of the pipe component 33, the pipe component 33 and the piston head 32 may be assembled first and then integrally assembled with the piston body 31. In this case, the larger hole diameter of the large-diameter portion 3121 allows the pipe component 33 to pass through to allow the smooth installation of the piston body 31. Optionally, during installation of the pipe component 33, the piston head 32 and the piston body 31 may be assembled first and then integrally assembled with the pipe component 33. In this case, the larger hole diameter of the large-diameter portion 3121 allows the pipe component 33 to pass through to allow the smooth installation of the pipe component 33. Operators can freely choose the above two installation manners according to needs without considering the installation sequence of the whole lower piston component 30. The installation is flexible and convenient.

In some embodiments, the pipe body 331 and the joint 332 may be two relatively independent components. The joint 332 may be installed on the pipe body 331 so as to be secured to the pipe body 331. For example, the joint 332 may be coupled to the pipe body 331 by way of threaded connection, bonding, welding or interference fit. In some embodiments, the pipe body 331 and the joint 332 may be integrated as an independent component.

Referring to FIG. 5 to FIG. 6, the through hole 312 may be located on an outer circumferential side of the shaft hole 316, and the engaging portion 314 may be located on an outer circumferential side of the through hole 312. The shaft hole 316 close to the inside (that is, close to the axis) can be matched with the shaft portion 326 to provide support and guidance for the rotation of the piston head 32 relative to the piston body 31. The closer it is to the outer circumferential direction, the larger the size will be. Therefore, the engaging portion 314 arranged on the outermost side allows itself and the corresponding junction portion 325 to have larger sizes in the circumferential direction. The larger their sizes in the circumferential direction, the higher their bonding strength. The through hole 312 is located at the center position, that is, further outward than the shaft hole 316 and further inward than the engaging portion 314, so that as the piston head 32 rotates relative to the piston body 31, the pipe component 33 obtains a suitable circumferential displacement. Through this suitable displacement, the joint 332 is sufficient to move from the first position to the second position, or vice versa. Furthermore, this suitable displacement is not too large. If the displacement is too large, it may lead to some unforeseen consequences. For example, if the displacement is too large, the piston body 31 needs to provide a larger movement space, which is not conducive to the proper arrangement of other components or structures. For another example, if the displacement is too large, the bending of the pipe component 33 after rotation is larger, which will increase the risk of damage to the pipe component 33 and also affect the flow velocity or flow rate of the liquid in the pipe component 33.

There are various ways to couple the pipe component 33 with the piston head 32, which is not particularly limited in the present disclosure. As an implementation, referring to FIG. 9, a bottom of the piston head 32 is provided with an insertion hole 321 extending in a vertical direction, the joint 332 can be upward inserted into the insertion hole 321 to couple the pipe component 33 with the piston head 32, and the joint 332 can be downward pulled out of the insertion hole 321 to separate the pipe component 33 from the piston head 32.

In this implementation, the combination of the pipe component 33 and the piston head 32 is achieved through the insertion hole 321 and the joint 332 inserted into the insertion hole, so that when the piston head 32 is rotated relative to the piston body 31, the pipe component 33 can rotate together with the piston head 32 relative to the piston body 31. When the piston head 32 moves to the first position, the joint 332 can be downward pulled out of the insertion hole 321 and can also be upward inserted into the insertion hole 321 by moving the pipe component 33. When the piston head 32 moves to the second position, since the pipe component 33 is blocked by the piston body 31, the joint 332 cannot be downward pulled out of the insertion hole 321, which enables the pipe component 33 to be reliably secured to the piston body 31 and the piston head 32.

Still referring to FIG. 9, the bottom of the piston head 32 may be provided with a convex pillar 323 extending downward, and the convex pillar 323 forms the insertion hole 321. This implementation is favorable for reducing the weight of the piston head 32 and reducing the materials required for the piston head.

Referring to FIG. 4, the piston body 31 may further be provided with an abutting portion 313. The abutting portion 313 can extend upward from the upper surface of the upper end wall 311 of the piston body 31 and partially surround the small-diameter portion 3122. In combination with FIG. 6, when the piston head 32 is located at the second position, the joint 332 can abut against an upper end surface of the abutting portion 313.

When the piston head 32 is located at the second position relative to the piston body 31, the joint 332 abuts against the abutting portion 313 to reliably prevent the pipe component 33 from moving downward. Through the abutting portion 313 extending upward, when abutting against the abutting portion 313, the joint 332 will be located at a higher position, which is beneficial for reducing the length of the convex pillar 323. Considering that an excessively long convex pillar 323 is prone to accidental damage, this implementation is favorable for reducing the risk of damage to the convex pillar 323.

Still referring to FIG. 9, the bottom of the piston head 32 may further be provided with a rib portion 324 extending downward, and the rib portion 324 may extend to the convex pillar 323. The rib portion 324 with this structure can improve the overall strength of the piston head 32, and can support the convex pillar 323 to avoid accidental damage to the convex pillar 323.

It should be noted that the piston head 32 may be provided with multiple rib portions 324, where only one rib portion 324 extends to the convex pillar 323, or multiple rib portions 324 all extend to the convex pillar 323.

There are various ways to assemble the piston body 31 and the piston head 32. As an implementation, referring to FIG. 4, FIG. 6 and FIG. 9, as mentioned above, the piston head 32 may be provided with a junction portion 325, and the upper end of the piston body 31 may be provided with an engaging portion 314. By rotating the piston head 32 relative to the piston body 31, the junction portion 325 and the engaging portion 314 are configured to be coupled or separated. With the junction portion 325 and the engaging portion 314 coupling or separating, the pipe component 33 locks or releases relative to the piston head 32. Furthermore, the lower piston component 30 may further include a fastener 34, and the fastener 34 is configured to detachably fasten the piston head 32 to the piston body 31. For example, the fastener 34 may be a bolt or a nut.

During disassembly of the piston head 32 from the piston body 31, the fastener 34 can be disassembled first, and then, the piston head 32 can be rotated relative to the piston body 31 to separate the junction portion 325 from the engaging portion 314, thereby disassembling the piston head 32 from the piston body 31. During installation of the piston head 32 to the piston body 31, the piston head 32 can be rotated relative to the piston body 31 first to couple the junction portion 325 with the engaging portion 314, and then, the fastener 34 is fastened, thereby reliably securing the piston head 32 to the piston body 31. This implementation balances the convenience of disassembly and installation of the piston head 32 relative to the piston body 31 and the firmness of connection between the piston head 32 and the piston body 31.

In combination with FIG. 4, a part of the fastener 34 can extend into the lower end of the shaft hole 316 to be coupled to the shaft portion 326. Alternatively, the lower end of the shaft portion 326 can downward extend out of the shaft hole 316 to be coupled to the fastener 34.

In this way, the cooperation between the shaft portion 326 and the shaft hole 316 will not only provide a basis for the fastener 34 to secure the piston head 32 to the piston body 31, but also provide support for the rotation of the piston head 32 relative to the piston body 31.

There are various ways to couple the fastener 34 with the shaft portion 326, which is not particularly limited in the present disclosure. For example, in some embodiments, the shaft portion 326 may be provided with a threaded hole, and the fastener 34 may be a screw or a bolt. For another example, in other embodiments, the shaft portion 326 may be provided with external threads, and the fastener 34 may be a nut capable of being in threaded connection with the shaft portion.

There are various ways to implement the junction portion 325 and the engaging portion 314, which is not particularly limited in the present disclosure. For example, in some embodiments, one of the junction portion 325 and the engaging portion 314 is a protrusion combination portion, the other is a recess combination portion, and the recess combination portion can at least partially receive the protrusion combination portion so as to be coupled to the protrusion combination portion. This implementation has many advantages such as simple structure and easy implementation.

It can be understood that although in the current embodiment, the junction portion 325 is presented as a protrusion combination portion and the engaging portion 314 is implemented as a recess combination portion suitable for receiving the protrusion combination portion, in other embodiments of the present disclosure, both may have other structures. For example, in an alternative embodiment, the junction portion 325 may be a recess combination portion, and the engaging portion 314 may be a protrusion combination portion.

Referring to FIG. 9, in a non-restrictive embodiment, the junction portion 325 is a protrusion combination portion protruding inward from an inner circumferential surface of the support circumferential wall 327, the engaging portion 314 is a recess combination portion, and the recess combination portion is defined by a protrusion portion 315 on a bottom surface of the support recess portion 317. The piston head 32 may be provided with multiple junction portions 325, and the multiple protrusion combination portions may be distributed at intervals along a circumferential direction. The piston body 31 may be provided with multiple protrusion portions 315, and the multiple protrusion portions 315 may be distributed at intervals along a circumferential direction and respectively define multiple engaging portions 314. Each junction portion 325 is movable between a coupled position coupled to the corresponding engaging portion 314 and a release position detached from the engaging portion 314 by rotating the piston head 32 relative to the piston body 31. According to the structures of the piston body 31 and the piston head 32, it is only necessary to rotate the piston head 32 relative to the piston body 31 to easily couple or separate the piston body and the piston head, and the combination of the piston body and the piston head has relatively high strength.

Referring to FIG. 10, each engaging portion 314 may have a head end 3141 and a tail end 3142. As each junction portion 325 moves from the release position to the coupled position, the junction portion 325 enters the engaging portion 314 along a direction from the head end 3141 to the tail end 3142 of the corresponding engaging portion 314. A top surface of the engaging portion 314 may include a guide surface 3143 located at the head end 3141 of the engaging portion 314, and the guide surface 3143 may be configured to gradually extend downward as the guide surface approaches the tail end 3142 of the engaging portion 314.

The guide surface 3143 with the above structure can guide the junction portion 325 to enable the junction portion 325 to smoothly enter the corresponding engaging portion 314, which is beneficial for reducing the operation difficulty of installing the piston head 32 onto the piston body 31, and beneficial for reducing the manufacturing accuracy required for the junction portion 325 and the engaging portion 314.

Still referring to FIG. 10, the tail end of each engaging portion 314 may further be provided with a blocking portion 3144 configured to block the engaging portion 314. When the junction portion 325 enters the engaging portion 314 along the direction from the head end 3141 to the tail end 3142, the blocking portion 3144 will prevent the junction portion 325 from continuing to move forward, and the junction portion 325 is maintained in the engaging portion 314, so that an operator can easily perceive that the junction portion 325 and the engaging portion 314 have been well coupled. If there is no blocking portion 3144, the junction portion 325 already entering the engaging portion 314 is prone to leaving the engaging portion 314 again due to excessive rotation by the operator.

Referring to FIG. 3 and FIG. 4, the lower piston component 30 may further include a first sealing element 36. In combination with FIG. 4, the first sealing element 36 can surround the circumferential wall portion 327 to provide a certain degree of sealing effect, thereby reducing the risk of foreign objects entering the inside of the lower piston component 30 from a gap between the piston head 32 and the piston body 31. Still referring to FIG. 3 and FIG. 4, the lower piston component 30 may further include a second sealing element 37. The second sealing element 37 may be located between the first sealing element 36 and the circumferential wall portion 327 of the piston head 32, thereby further reducing the risk of foreign objects entering the inside of the lower piston component 30 from the gap between the piston head 32 and the piston body 31.

Still referring to FIG. 3, the lower piston component 30 may further include a fastener 38, and the fastener 38 may be configured to fasten the filter screen 35 to the piston head 32. For example, the fastener 38 may be a screw or a bolt, which is configured to pass through the through hole on the filter screen 35 to be in threaded connection with the threaded hole on the piston head 32, thereby fastening the filter screen 35 to the piston head 32.

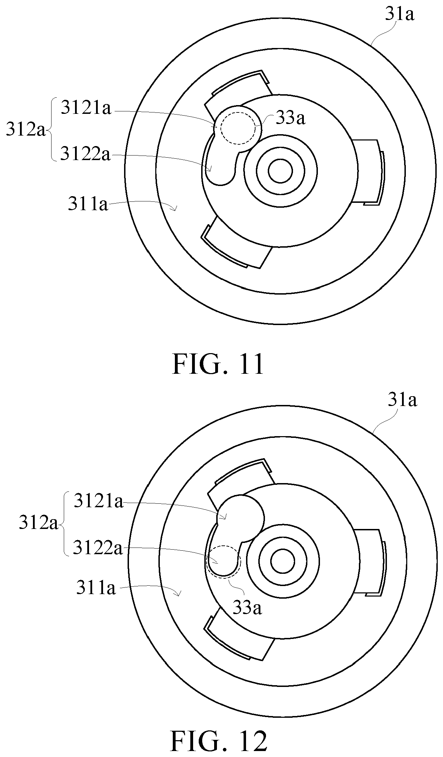

According to another modified embodiment of the present disclosure, a piston body 31a is shown in FIG. 11 and FIG. 12. The piston body 31a is roughly the same as the piston body 31 mentioned above. For the sake of simplicity, the following will focus on explaining the differences between the piston body 31a and the piston body 31, and appropriately omit repeated explanations.

Referring to FIG. 11 and FIG. 12, an upper end wall 311a of the piston body 31a may be provided with a through hole 312a. The through hole 312a may include a release portion 3121a and a clamping portion 3122a. The outer diameter of the pipe component 33a may be slightly greater than the inner diameter of the clamping portion 3122a and less than the inner diameter of the release portion 3121a. As shown in FIG. 11, when the piston head 32 is located at the first position relative to the piston body 31a, the pipe component 33a is located in the release portion 3121a. As shown in FIG. 12, when the piston head 32 is located at the second position relative to the piston body 31a, the pipe component 33a is located in the clamping portion 3122a.

As the piston head 32 pivots relative to the piston body 31a between the first position and the second position, the piston head 32 drives the pipe component 33a to move. After the piston head 32 moves to the first position, the pipe component 33a moves into the release portion 3121a. Since the inner diameter of the release portion 3121a is greater than the outer diameter of the pipe component 33a, the pipe component 33a is movable in a vertical direction. Therefore, when the pipe component 33a is located in the release portion 3121a, the pipe component 33a can be moved downward relative to the piston head 32, so that the pipe component 33a is separated from the piston head 32 and finally separated from the piston body 31a. After the piston head 32 moves to the second position, the pipe component 33a moves into the clamping portion 3122a. Since the outer diameter of the pipe component 33a is slightly less than the inner diameter of the clamping portion 3122a, the pipe component 33a will be clamped and secured by the clamping portion 3122a and cannot move downward. Therefore, when the pipe component 33a is located in the clamping portion 3122a, the pipe component 33a cannot be separated from the piston head 32 by moving the pipe component 33a downward.

It should be noted that various elements described in the above specific implementations can be coupled in any suitable way without contradiction. To avoid unnecessary repetitions, various possible combination manners will not be separately explained in the present disclosure. For example, in some examples, the outer circumference of the piston body and the inner wall of the piston head may be respectively provided with flanges and sliding grooves matched with each other, so that the piston can rotate around the above axis relative to the piston body.

It should be understood that multiple components and/or parts may be provided by a single integrated component or part. Alternatively, a single integrated component or part may be divided into multiple separated components and/or parts. The disclosure "a" or "one" for describing a component or part is not intended to exclude other components or parts.

It should be understood that although the terms "first" or "second" and the like may be used in the present disclosure to describe various elements, these elements are not set by these terms, and these terms are only used for distinguishing one element from another.

The scope of protection of the present disclosure is not limited to the above embodiments. Any variation or replacement figured out by those skilled in the art within the technical scope disclosed in the present disclosure shall fall within the scope of protection of the present disclosure. Therefore, the scope of protection of the present disclosure shall be determined with reference to the scope of protection of the claims.

## Claims

1. A brewing device (100), comprising a piston component (20,30) and a brewing cylinder (40), the piston component (20,30) being configured to at least partially extend into the brewing cylinder (40) from a lower end of the brewing cylinder (40), the piston component (20,30) comprising a piston body (31,31a), a piston head (32) and a pipe component (33,33a), the piston head (32) being installed at an upper end of the piston body (31,3 1a), and the pipe component (33,33a) at least partially extending in the piston body (31,31a) and the piston head (32) and defining a flow path for introducing a liquid into the brewing cylinder (40), **characterized in that**,
the piston head (32) is pivotable around an axis relative to the piston body (31,31a) between a first position and a second position; the pipe component (33,33a) is coupled to the piston head (32) and biased relative to the axis, so that as the piston head (32) pivots relative to the piston body (31,31a), the pipe component (33,33a) rotates around the axis; when the piston head (32) is located at the first position, the pipe component (33,33a) is allowed to move downwardly relative to the piston head (32) to separate from the piston head (32); and when the piston head (32) is located at the second position, the piston body (31,31a) prevents the pipe component (33,33a) from moving downward relative to the piston head (32).

2. The brewing device (100) according to claim 1, wherein the piston head (32) is provided with a junction portion (325), and the upper end of the piston body (31,31a) is provided with an engaging portion (314); when the piston head (32) is located at the second position, the junction portion (325) is coupled to the engaging portion (314) to secure the piston head (32) to the piston body (31,31a); and when the piston head (32) is located at the first position, the junction portion (325) is separated from the engaging portion (314).

3. The brewing device (100) according to claim 2, wherein one of the piston head (32) and the piston body (31,31a) is provided with a shaft portion (326) coinciding with the axis, and the other is provided with a shaft hole (316) for inserting the shaft portion (326) and supporting the rotation of the shaft portion (326).

4. The brewing device (100) according to claim 3, wherein the piston component (20,30) further comprises a fastener (34), and a part of the fastener (34) extends into the shaft hole (316) to be coupled to the shaft portion (326); or, a lower end of the shaft portion (326) extends out of the shaft hole (316) to be coupled to the fastener (34); and/or one of the piston head (32) and the piston body (31,31a) is provided with a support circumferential wall (327) surrounding the shaft portion (326), and the other is provided with a support recess portion (317) for inserting the support circumferential wall (327); and an outer circumferential surface of the support circumferential wall (327) is in close contact with an inner surface of the support recess portion (317), and central shafts of both coincide with the axis.

5. The brewing device (100) according to claim 1, wherein the pipe component (33,33a) comprises a pipe body (331) and a joint (332) secured to the pipe body (331), an upper end wall of the piston body (31,31a) is provided with a through hole (312,312a), the through hole (312,312a) comprises a large-diameter portion (3121) and a small-diameter portion (3122) which are communicated with each other, and the joint (332) is configured to pass through the large-diameter portion (3121) and is restricted from passing through the small-diameter portion (3122); when the piston head (32) is located at the first position, the joint (332) is located above the large-diameter portion (3121); and when the piston head (32) is located at the second position, the joint (332) is located above the small-diameter portion (3122).

6. The brewing device (100) according to claim 5, wherein the piston head (32) is provided with a junction portion (325), and the upper end of the piston body (31,31a) is provided with an engaging portion (314); as the piston head (32) pivots from the second position to the first position relative to the piston body (31,31a), the junction portion (325) and the engaging portion (314) are switched from a coupled state to a separated state; the piston head (32) is provided with a shaft portion (326) coinciding with the axis, and the piston body (31,31a) is provided with a shaft hole (316) for inserting the shaft portion (326) and supporting the rotation of the shaft portion (326); and the through hole (312,312a) is located on an outer circumferential side of the shaft hole (316), and the engaging portion (314) is located on an outer circumferential side of the through hole (312,312a).

7. The brewing device (100) according to claim 5, wherein a bottom of the piston head (32) is provided with an insertion hole (321) extending in a vertical direction, and the joint (332) is detachably inserted into the insertion hole (321) to couple the pipe component (33,33a) with the piston head (32).

8. The brewing device (100) according to claim 7, wherein the bottom of the piston head (32) is provided with a convex pillar (323) extending downward, and the convex pillar (323) forms the insertion hole (321).

9. The brewing device (100) according to claim 8, wherein the pipe component (33,33a) comprises a pipe body (331) and a joint (332) secured to the pipe body (331), an upper end wall (311) of the piston body (31,31a) is provided with a through hole (312,312a), the through hole (312,312a) comprises a large-diameter portion (3121) and a small-diameter portion (3122) which are communicated with each other, and the joint (332) is configured to pass through the large-diameter portion (3121) and is restricted from passing through the small-diameter portion (3122); when the piston head (32) is located at the first position, the joint (332) is located above the large-diameter portion (3121); when the piston head (32) is located at the second position, the joint (332) is located above the small-diameter portion (3122); the piston body (31,31a) is further provided with an abutting portion (313), and the abutting portion (313) extends upward from a top surface of the upper end wall (311) and partially surrounds the small-diameter portion (3122); and when the piston head (32) is located at the second position, the joint (332) abuts against the abutting portion (313).

10. The brewing device (100) according to claim 8, wherein the piston head (32) further comprises a rib portion (324), and the rib portion (324) extends to the convex pillar (323).

11. The brewing device (100) according to claim 4, wherein the junction portion (325) is a protrusion combination portion protruding inward from an inner circumferential surface of the support circumferential wall (327), the support recess portion (317) is provided with a protrusion portion (315) protruding upward from a bottom surface thereof, the engaging portion (314) is a recess combination portion defined by the protrusion portion (315), a plurality of protrusion combination portions are distributed at intervals along a circumferential direction, a plurality of protrusion portions (315) are distributed at intervals along the circumferential direction, a plurality of recess combination are defined by the plurality of protrusion portions (315) respectively, and each protrusion combination portion is movable between a coupled position coupled to the corresponding recess combination portion and a release position detached from the recess combination portion by rotating the piston head (32) relative to the piston body (31,31a).

12. The brewing device according to claim 11, wherein as each protrusion combination portion moves from the release position to the coupled position, the protrusion combination portion enters the recess combination portion along a direction from a head end (3141) to a tail end (3142) of the recess combination portion, wherein a top surface of the recess combination portion comprises a guide surface (3143) located at the head end (3141) of the recess combination portion, and the guide surface (3143) is configured to gradually extend downward as the guide surface approaches the tail end (3142) of the recess combination portion; and/or as each protrusion combination portion moves from the release position to the coupled position, the protrusion combination portion enters the recess combination portion along the direction from the head end (3141) to the tail end (3142) of the recess combination portion, wherein the tail end (3142) of the recess combination portion is further provided with a blocking portion (3144) configured to block the recess combination portion.

## Patentansprüche

1. Brauvorrichtung (100) mit einem Kolbenelement (20, 30) und einem Brauzylinder (40), wobei das Kolbenelement (20, 30) dazu ausgelegt ist, sich zumindest teilweise von einem unteren Ende des Brauzylinders (40) in den Brauzylinder (40) hinein zu erstrecken, wobei das Kolbenelement (20, 30) einen Kolbenkörper (31, 31a), einen Kolbenkopf (32) und ein Rohrelement (33, 33a) aufweist, wobei der Kolbenkopf (32) an einem oberen Ende des Kolbenkörpers (31, 31a) installiert ist, und wobei sich das Rohrelement (33, 33a) zumindest teilweise in dem Kolbenkörper (31, 31a) und dem Kolbenkopf (32) erstreckt und einen Strömungspfad zum Einleiten einer Flüssigkeit in den Brauzylinder (40) definiert, **dadurch gekennzeichnet, dass**
der Kolbenkopf (32) relativ zu dem Kolbenkörper (31, 31a) um eine Achse zwischen einer ersten Position und einer zweiten Position schwenkbar ist; das Rohrelement (33, 33a) mit dem Kolbenkopf (32) gekoppelt und relativ zu der Achse versetzt ist, so dass sich das Rohrelement (33, 33a) um die Achse dreht, wenn der Kolbenkopf (32) relativ zu dem Kolbenkörper (31, 31a) schwenkt; wobei, wenn sich der Kolbenkopf (32) in der ersten Position befindet, sich das Rohrelement (33, 33a) relativ zu dem Kolbenkopf (32) nach unten bewegen kann, um sich von dem Kolbenkopf (32) zu trennen; und wenn sich der Kolbenkopf (32) in der zweiten Position befindet, der Kolbenkörper (31, 31a) verhindert, dass sich das Rohrelement (33, 33a) relativ zu dem Kolbenkopf (32) nach unten bewegt.

2. Brauvorrichtung (100) nach Anspruch 1, wobei der Kolbenkopf (32) mit einem Verbindungsabschnitt (325) versehen ist und das obere Ende des Kolbenkörpers (31, 31a) mit einem Eingriffsabschnitt (314) versehen ist; wobei, wenn sich der Kolbenkopf (32) in der zweiten Position befindet, der Verbindungsabschnitt (325) mit dem Eingriffsabschnitt (314) gekoppelt ist, um den Kolbenkopf (32) an dem Kolbenkörper (31, 31a) zu befestigen; und wobei, wenn sich der Kolbenkopf (32) in der ersten Position befindet, der Verbindungsabschnitt (325) von dem Eingriffsabschnitt (314) getrennt ist.

3. Brauvorrichtung (100) nach Anspruch 2, wobei entweder der Kolbenkopf (32) oder der Kolbenkörper (31, 31a) mit einem Wellenabschnitt (326) versehen ist, der mit der Achse zusammenfällt, und der jeweils andere mit einem Wellenloch (316) zum Einsetzen des Wellenabschnitts (326) und zum Unterstützen der Drehung des Wellenabschnitts (326) versehen ist.

4. Brauvorrichtung (100) nach Anspruch 3, wobei das Kolbenelement (20, 30) ferner ein Befestigungselement (34) aufweist, und wobei sich ein Teil des Befestigungselements (34) in das Wellenloch (316) erstreckt, um mit dem Wellenabschnitt (326) gekoppelt zu sein; oder wobei sich ein unteres Ende des Wellenabschnitts (326) aus dem Wellenloch (316) heraus erstreckt, um mit dem Befestigungselement (34) gekoppelt zu sein; und/oder wobei entweder der Kolbenkopf (32) oder der Kolbenkörper (31, 31a) mit einer Umfangsstützwand (327) versehen ist, die den Wellenabschnitt (326) umgibt, und der jeweils andere mit einem Stützaussparungsabschnitt (317) zum Einsetzen der Umfangsstützwand (327) versehen ist; und wobei eine äußere Umfangsfläche der Umfangsstützwand (327) in engem Kontakt mit einer Innenfläche des Stützaussparungsabschnitts (317) steht, und wobei Mittelachsen von beiden mit der Achse zusammenfallen.

5. Brauvorrichtung (100) nach Anspruch 1, wobei das Rohrelement (33, 33a) einen Rohrkörper (331) und ein mit dem Rohrkörper (331) verbundenes Gelenk (332) aufweist, wobei eine obere Endwand des Kolbenkörpers (31, 31a) mit einem Durchgangsloch (312, 312a) versehen ist, wobei das Durchgangsloch (312, 312a) einen Abschnitt mit großem Durchmesser (3121) und einen Abschnitt mit kleinem Durchmesser (3122) aufweist, die miteinander in Verbindung stehen, und wobei das Gelenk (332) dazu ausgelegt ist, durch den Abschnitt mit großem Durchmesser (3121) hindurchzugehen, und daran gehindert ist, durch den Abschnitt mit kleinem Durchmesser (3122) hindurchzugehen; wobei, wenn sich der Kolbenkopf (32) in der ersten Position befindet, sich das Gelenk (332) über dem Abschnitt mit großem Durchmesser (3121) befindet; und wobei, wenn sich der Kolbenkopf (32) in der zweiten Position befindet, sich das Gelenk (332) über dem Abschnitt mit kleinem Durchmesser (3122) befindet.

6. Brauvorrichtung (100) nach Anspruch 5, wobei der Kolbenkopf (32) mit einem Verbindungsabschnitt (325) versehen ist, und das obere Ende des Kolbenkörpers (31, 31a) mit einem Eingriffsabschnitt (314) versehen ist; wobei, wenn der Kolbenkopf (32) relativ zu dem Kolbenkörper (31, 31a) von der zweiten Position in die erste Position schwenkt, der Verbindungsabschnitt (325) und der Eingriffsabschnitt (314) von einem gekoppelten Zustand in einen getrennten Zustand übergehen; wobei der Kolbenkopf (32) mit einem Wellenabschnitt (326) versehen ist, der mit der Achse zusammenfällt, und der Kolbenkörper (31, 31a) mit einem Wellenloch (316) zum Einsetzen des Wellenabschnitts (326) und zum Unterstützen der Drehung des Wellenabschnitts (326) versehen ist; und wobei sich das Durchgangsloch (312, 312a) an einer äußeren Umfangsseite des Wellenlochs (316) befindet, und sich der Eingriffsabschnitt (314) an einer äußeren Umfangsseite des Durchgangslochs (312, 312a) befindet.

7. Brauvorrichtung (100) nach Anspruch 5, wobei ein Boden des Kolbenkopfs (32) mit einem Einsatzloch (321) versehen ist, das sich in einer vertikalen Richtung erstreckt, und wobei das Gelenk (332) lösbar in das Einsatzloch (321) eingesetzt ist, um das Rohrelement (33, 33a) mit dem Kolbenkopf (32) zu koppeln.

8. Brauvorrichtung (100) nach Anspruch 7, wobei der Boden des Kolbenkopfs (32) mit einem konvexen Pfeiler (323) versehen ist, der sich nach unten erstreckt, und wobei der konvexe Pfeiler (323) das Einsatzloch (321) bildet.

9. Brauvorrichtung (100) nach Anspruch 8, wobei das Rohrelement (33, 33a) einen Rohrkörper (331) und ein mit dem Rohrkörper (331) verbundenes Gelenk (332) aufweist, wobei eine obere Endwand (311) des Kolbenkörpers (31, 31a) mit einem Durchgangsloch (312, 312a) versehen ist, wobei das Durchgangsloch (312, 312a) einen Abschnitt mit großem Durchmesser (3121) und einen Abschnitt mit kleinem Durchmesser (3122) aufweist, die miteinander in Verbindung stehen, und wobei das Gelenk (332) dazu ausgelegt ist, durch den Abschnitt mit großem Durchmesser (3121) hindurchzugehen, und daran gehindert ist, durch den Abschnitt mit kleinem Durchmesser (3122) hindurchzugehen; wobei, wenn sich der Kolbenkopf (32) in der ersten Position befindet, sich das Gelenk (332) über dem Abschnitt mit großem Durchmesser (3121) befindet; wobei, wenn sich der Kolbenkopf (32) in der zweiten Position befindet, sich das Gelenk (332) über dem Abschnitt mit kleinem Durchmesser (3122) befindet; wobei der Kolbenkörper (31, 31a) ferner mit einem Anlageabschnitt (313) versehen ist, und wobei sich der Anlageabschnitt (313) von einer Oberseite der oberen Endwand (311) nach oben erstreckt und den Abschnitt mit kleinem Durchmesser (3122) teilweise umgibt; und wobei, wenn sich der Kolbenkopf (32) in der zweiten Position befindet, das Gelenk (332) an dem Anlageabschnitt (313) anliegt.

10. Brauvorrichtung (100) nach Anspruch 8, wobei der Kolbenkopf (32) ferner einen Rippenabschnitt (324) aufweist, und wobei sich der Rippenabschnitt (324) zu dem konvexen Pfeiler (323) erstreckt.

11. Brauvorrichtung (100) nach Anspruch 4, wobei der Verbindungsabschnitt (325) ein Vorsprungkombinationsabschnitt ist, der von einer inneren Umfangsfläche der Umfangsstützwand (327) nach innen vorsteht, wobei der Stützausschnitt (317) mit einem Vorsprungsabschnitt (315) versehen ist, der von einer Bodenfläche davon nach oben vorsteht, wobei der Eingriffsabschnitt (314) ein Aussparungskombinationsabschnitt ist, der durch den Vorsprungsabschnitt (315) definiert ist, wobei eine Mehrzahl von Vorsprungkombinationsabschnitten in Abständen entlang einer Umfangsrichtung verteilt sind, wobei eine Mehrzahl von Vorsprungsabschnitten (315) in Abständen entlang der Umfangsrichtung verteilt sind, wobei eine Mehrzahl von Aussparungskombinationen jeweils durch die Mehrzahl von Vorsprungsabschnitten (315) definiert sind, und wobei jeder Vorsprungkombinationsabschnitt zwischen einer gekoppelten Position, die mit dem entsprechenden Aussparungskombinationsabschnitt gekoppelt ist, und einer gelösten Position, die von dem Aussparungskombinationsabschnitt gelöst ist, durch Drehen des Kolbenkopfs (32) relativ zu dem Kolbenkörper (31, 31a) beweglich ist.

12. Brauvorrichtung nach Anspruch 11, wobei, wenn sich jeder Vorsprungkombinationsabschnitt von der gelösten Position zu der gekoppelten Position bewegt, der Vorsprungkombinationsabschnitt entlang einer Richtung von einem Kopfende (3141) zu einem Schwanzende (3142) des Aussparungskombinationsabschnitts in den Aussparungskombinationsabschnitt eintritt, wobei eine Oberseite des Aussparungskombinationsabschnitts eine Führungsfläche (3143) aufweist, die sich an dem Kopfende (3141) des Aussparungskombinationsabschnitts befindet, und wobei die Führungsfläche (3143) dazu ausgelegt ist, sich allmählich nach unten zu erstrecken, wenn sich die Führungsfläche dem Schwanzende (3142) des Aussparungskombinationsabschnitts nähert; und/oder wobei, wenn sich jeder Vorsprungkombinationsabschnitt von der gelösten Position zu der gekoppelten Position bewegt, der Vorsprungkombinationsabschnitt entlang der Richtung von dem Kopfende (3141) zu dem Schwanzende (3142) des Aussparungskombinationsabschnitts in den Aussparungskombinationsabschnitt eintritt, wobei das Schwanzende (3142) des Aussparungskombinationsabschnitts ferner mit einem Blockierabschnitt (3144) versehen ist, der dazu ausgelegt ist, den Aussparungskombinationsabschnitt zu blockieren.

## Revendications

1. Dispositif de brassage (100) comprenant un composant de piston (20, 30) et un cylindre de brassage (40), le composant de piston (20, 30) étant conçu pour s'étendre au moins partiellement dans le cylindre de brassage (40) depuis une extrémité inférieure du cylindre de brassage (40), le composant de piston (20, 30) comprenant un corps de piston (31, 31a), une tête de piston (32) et un composant de tube (33, 33a), la tête de piston (32) étant installée à une extrémité supérieure du corps de piston (31, 31a), et le composant de tube (33, 33a) s'étendant au moins partiellement dans le corps de piston (31, 31a) et la tête de piston (32) et définissant un trajet d'écoulement pour l'introduction d'un liquide dans le cylindre de brassage (40), **caractérisé en ce que**,
la tête de piston (32) peut pivoter autour d'un axe par rapport au corps de piston (31, 31a) entre une première position et une seconde position ; le composant de tuyau (33, 33a) est couplé à la tête de piston (32) et sollicité par rapport à l'axe, de sorte que lorsque la tête de piston (32) pivote par rapport au corps de piston (31, 31a), le composant de tuyau (33, 33a) tourne autour de l'axe ; lorsque la tête de piston (32) est située dans la première position, le composant de tuyau (33, 33a) peut se déplacer vers le bas par rapport à la tête de piston (32) pour se séparer de la tête de piston (32) ; et lorsque la tête de piston (32) est située dans la seconde position, le corps de piston (31, 31a) empêche le composant de tuyau (33, 33a) de se déplacer vers le bas par rapport à la tête de piston (32).

2. Dispositif de brassage (100) selon la revendication 1, dans lequel la tête de piston (32) est pourvue d'une partie de jonction (325), et l'extrémité supérieure du corps de piston (31, 31a) est pourvue d'une partie d'engagement (314) ; lorsque la tête de piston (32) est située à la deuxième position, la partie de jonction (325) est couplée à la partie d'engagement (314) pour fixer la tête de piston (32) au corps de piston (31, 31a); et lorsque la tête de piston (32) est située à la première position, la partie de jonction (325) est séparée de la partie d'engagement (314).

3. Dispositif de brassage (100) selon la revendication 2, dans lequel l'un de la tête de piston (32) et du corps de piston (31, 31a) est pourvu d'une partie d'arbre (326) coïncidant avec l'axe, et l'autre est pourvu d'un trou d'arbre (316) pour insérer la partie d'arbre (326) et supporter la rotation de la partie d'arbre (326).

4. Dispositif de brassage (100) selon la revendication 3, dans lequel le composant de piston (20, 30) comprend en outre un élément de fixation (34), et une partie de l'élément de fixation (34) s'étend dans le trou d'arbre (316) pour être couplée à la partie d'arbre (326) ; ou, une extrémité inférieure de la partie d'arbre (326) s'étend hors du trou d'arbre (316) pour être couplée à l'élément de fixation (34) ; et/ou l'un de la tête de piston (32) et du corps de piston (31, 31a) est pourvu d'une paroi circonférentielle de support (327) entourant la partie d'arbre (326), et l'autre est pourvue d'une partie d'évidement de support (317) pour insérer la paroi circonférentielle de support (327) ; et une surface circonférentielle extérieure de la paroi circonférentielle de support (327) est en contact étroit avec une surface intérieure de la partie d'évidement de support (317), et les arbres centraux des deux coïncident avec l'axe.

5. Dispositif de brassage (100) selon la revendication 1, dans lequel le composant de tuyau (33, 33a) comprend un corps de tuyau (331) et un joint (332) fixé au corps de tuyau (331), une paroi d'extrémité supérieure du corps de piston (31, 31a) est pourvue d'un trou traversant (312, 312a), le trou traversant (312, 312a) comprend une partie de grand diamètre (3121) et une partie de petit diamètre (3122) qui sont en communication l'une avec l'autre, et le joint (332) est configuré pour traverser la partie de grand diamètre (3121) et est empêché de traverser la partie de petit diamètre (3122) ; lorsque la tête de piston (32) est située dans la première position, le joint (332) est situé au-dessus de la partie de grand diamètre (3121) ; et lorsque la tête de piston (32) est située dans la deuxième position, le joint (332) est situé au-dessus de la partie de petit diamètre (3122).

6. Dispositif de brassage (100) selon la revendication 5, dans lequel la tête de piston (32) est pourvue d'une partie de jonction (325), et l'extrémité supérieure du corps de piston (31, 31a) est pourvue d'une partie d'engagement (314) ; lorsque la tête de piston (32) pivote de la deuxième position à la première position par rapport au corps de piston (31, 31a), la partie de jonction (325) et la partie d'engagement (314) passent d'un état couplé à un état séparé ; la tête de piston (32) est pourvue d'une partie d'arbre (326) coïncidant avec l'axe, et le corps de piston (31, 31a) est pourvu d'un trou d'arbre (316) pour insérer la partie d'arbre (326) et supporter la rotation de la partie d'arbre (326) ; et le trou traversant (312, 312a) est situé sur un côté circonférentiel extérieur du trou d'arbre (316), et la partie d'engagement (314) est située sur un côté circonférentiel extérieur du trou traversant (312, 312a).

7. Dispositif de brassage (100) selon la revendication 5, dans lequel une partie inférieure de la tête de piston (32) est pourvue d'un trou d'insertion (321) s'étendant dans une direction verticale, et le joint (332) est inséré de manière amovible dans le trou d'insertion (321) pour coupler le composant de tuyau (33, 33a) à la tête de piston (32).

8. Dispositif de brassage (100) selon la revendication 7, dans lequel la partie inférieure de la tête de piston (32) est pourvue d'un pilier convexe (323) s'étendant vers le bas, et le pilier convexe (323) forme le trou d'insertion (321).

9. Dispositif de brassage (100) selon la revendication 8, dans lequel le composant de tuyau (33, 33a) comprend un corps de tuyau (331) et un joint (332) fixé au corps de tuyau (331), une paroi d'extrémité supérieure (311) du corps de piston (31, 31a) est pourvue d'un trou traversant (312, 312a), le trou traversant (312, 312a) comprend une partie de grand diamètre (3121) et une partie de petit diamètre (3122) qui sont en communication l'une avec l'autre, et le joint (332) est configuré pour traverser la partie de grand diamètre (3121) et est empêché de traverser la partie de petit diamètre (3122) ; lorsque la tête de piston (32) est située dans la première position, le joint (332) est situé au-dessus de la partie de grand diamètre (3121) ; Lorsque la tête de piston (32) est située dans la deuxième position, le joint (332) est situé au-dessus de la partie de petit diamètre (3122) ; le corps de piston (31, 31a) est en outre pourvu d'une partie de butée (313), et la partie de butée (313) s'étend vers le haut à partir d'une surface supérieure de la paroi d'extrémité supérieure (311) et entoure partiellement la partie de petit diamètre (3122) ; et lorsque la tête de piston (32) est située dans la deuxième position, le joint (332) vient en butée contre la partie de butée (313).

10. Dispositif de brassage (100) selon la revendication 8, dans lequel la tête de piston (32) comprend en outre une partie nervurée (324), et la partie nervurée (324) s'étend jusqu'au pilier convexe (323).

11. Dispositif de brassage (100) selon la revendication 4, dans lequel la partie de jonction (325) est une partie de combinaison de saillie faisant saillie vers l'intérieur depuis une surface circonférentielle intérieure de la paroi circonférentielle de support (327), la partie d'évidement de support (317) est pourvue d'une partie de saillie (315) faisant saillie vers le haut depuis sa surface inférieure, la partie d'engagement (314) est une partie de combinaison d'évidement définie par la partie de saillie (315), une pluralité de parties de combinaison de parties de saillie sont réparties à intervalles le long d'une direction circonférentielle, une pluralité de parties de saillie (315) sont réparties à intervalles le long de la direction circonférentielle, une pluralité de combinaisons d'évidement sont définies par la pluralité de parties de saillie (315) respectivement, et chaque partie de combinaison de saillie est mobile entre une position couplée couplée à la partie de combinaison d'évidement correspondante et une position de libération détachée de la partie de combinaison d'évidement par rotation de la tête de piston (32) par rapport au corps de piston (31, 31a).

12. Dispositif de brassage selon la revendication 11, dans lequel, lorsque chaque partie de combinaison de saillie se déplace de la position de libération à la position couplée, la partie de combinaison de saillie pénètre dans la partie de combinaison d'évidement le long d'une direction allant d'une extrémité de tête (3141) à une extrémité de queue (3142) de la partie de combinaison d'évidement, dans lequel une surface supérieure de la partie de combinaison d'évidement comprend une surface de guidage (3143) située à l'extrémité de tête (3141) de la partie de combinaison d'évidement, et la surface de guidage (3143) est configurée pour s'étendre progressivement vers le bas à mesure que la surface de guidage se rapproche de l'extrémité de queue (3142) de la partie de combinaison d'évidement ; et/ou à mesure que chaque partie de combinaison de saillie se déplace de la position de libération à la position couplée, la partie de combinaison de saillie pénètre dans la partie de combinaison d'évidement le long de la direction allant de l'extrémité de tête (3141) à l'extrémité de queue (3142) de la partie de combinaison d'évidement, dans lequel l'extrémité de queue (3142) de la partie de combinaison d'évidement est en outre pourvue d'une partie de blocage (3144) configurée pour bloquer la partie de combinaison d'évidement.
